# EUROPÄISCHE PATENTSCHRIFT

(11) **EP 0 611 901 B1**
(45) Veröffentlichungstag und Bekanntmachung des Hinweises auf die Patenterteilung: **18.03.1998**
(21) Anmeldenummer: 94101737.8
(22) Anmeldetag: 04.02.1994
(51) Int. Cl.: F16F 13/00

(54) **Hydraulisch dämpfende Lagerbuchse**
Hydraulically damping bearing bushing
Coussinet de palier à amortissement hydraulique

(30) Priorität: 19.02.1993 DE 4305173
(43) Veröffentlichungstag der Anmeldung: 24.08.1994
(73) Patentinhaber: METZELER GIMETALL AG, D-80992 München (DE)
(72) Erfinder: Carstens, Udo, D-85669 Pastetten (DE); Gugsch, Mathias, D-80809 München (DE)
(74) Vertreter: Preissner, Nicolaus, Dipl.-Ing.

(56) Entgegenhaltungen:
- EP-A- 0 331 916
- EP-A- 0 332 901
- US-A- 4 811 933
- US-A- 4 861 004
- PATENT ABSTRACTS OF JAPAN vol. 13, no. 538 (M-900) (3886) 30. November 1989 & JP-A-01 220 736 (MARUGO RUBBER KOGYO K.K.)

## Beschreibung

Die Erfindung betrifft eine hydraulisch dämpfende Lagerbuchse, insbesondere für Kraftfahrzeuge, mit einem hohlzylindrischen Lagerkern und einem Außenrohr, zwischen denen stirnseitig im wesentlichen radial verlaufende Tragfedern aus elastomerem Material mit einem nach innen gewölbten Wandungsteil sowie zwischen Lagerkern und Außenrohr beidseitig horizontal verlaufende, radiale Tragstollen angeordnet sind, die den Raum zwischen den Tragfedern in eine obere und eine untere, mit Flüssigkeit gefüllte Kammer unterteilen, die über einen ringförmigen Kanal miteinander in Verbindung stehen, wobei alle elastomeren Bereiche in Form der beiden Tragfedern, der Tragstollen sowie eines zylindrischen, zwischen den beiden Tragfedern sich entlang des Lagerkerns erstreckenden, membranförmigen Elastomerteils als einstückiges Formteil gefertigt und ausvulkanisiert sind und auf den Enden des Lagerkerns im Bereich der sich nach innen wölbenden Wandungsbereiche der Tragfedern sich radial erstreckende, wulstförmige Anschlagringe angeordnet sind.

Eine derartige Lagerbuchse ist aus der US-A 4,861,004 bekannt.

Ausgehend hiervon stellt sich der vorliegenden Erfindung die Aufgabe zugrunde, insbesondere im Bereich der Leerlaufdrehzahl eine Schwingungsübertragung auf die Karosserie und somit den Fahrgastraum zu vermeiden.

Zur Lösung dieser Aufgabe wird erfindungsgemäß bei einer Lagerbuchse der eingangs genannten Art vorgesehen, daß zwischen den Tragstollen und dem Außenrohr ein zusätzlicher, kreisabschnittförmiger Kanal begrenzter Länge mit reduzierten Eintritts- und Austrittsöffnungen verläuft, in dem eine kugelförmige oder zylindrische Masse geringfügig kleineren Durchmessers als dem des Kanals eingeschlossen ist. Die in dem zusätzlichen Kanal vorgesehene mitschwingende Masse bewirkt ein Unterschwingen des Steifigkeitsverlaufs bei einer gewünschten Frequenz, beeinflußt aber demgegenüber nicht oder nur sehr geringfügig die Dämpfung bei großen Amplituden, da diese Masse nur ein begrenzter Schwingungsweg zur Verfügung steht. Erreicht die Masse das Ende des Kanals and den Austritts- oder Eintrittsöffnungen, so verschließt die Masse diese Öffnungen, wobei dann die Flüssigkeit über den eigentlichen Überströmkanal umgepumpt wird. Ein weiterer Vorteil der erfindungsgemäßen Lagerbuchse besteht darin, daß sie nur aus wenigen Teilen hergestellt werden kann und die darüber hinaus von Grundbauteilen ausgehend eine leichte Anpassung an unterschiedliche Anforderungen bezüglich Dämpfung und Steifigkeitsverlauf ermöglicht.

Vorteilhafte Ausgestaltungen der Erfindung sind in den Unteransprüchen aufgeführt.

Zur leichteren Variation des Dämpfungsverhaltens ist es vorteilhaft, wenn innenliegend zum Außenrohr zwischen den beiden Tragfedern eine zylindrische Hülse mit einer mittigen, radialen Einziehung angeordnet ist, die mit dem Außenrohr den ringförmigen Überströmkanal bildet. Dadurch ist es sehr leicht möglich, Überströmkanäle unterschiedlicher Konfiguration bei einem Grundmodel vorzusehen.

Zum Ausgleich von Wärmedehnungen oder der durch Schrumpf hervorgerufenen Zugspannungen ist es von Vorteil, wenn die radialen Tragstollen eine zentrale, sich längs erstreckende Hohlkammer aufweisen.

Eine weitere Möglichkeit zum Ausgleich von Wärmedehnungen besteht darin, daß innerhalb der beiden Flüssigkeitskammern und angrenzend an die Überströmkanal-Hülse ein Absorber aus elastomerem Material mit eingeschlossenen Gasbläschen angeordnet ist.

Damit das Lager bei höheren Frequenzen geringer Amplitude einen hohen Isolationsgrad erreicht, kann der Lagerkern im Bereich des membranförmigen Elastomerteils mit einer ringförmigen, einen Luftspalt zum darüberliegenden, als Entkopplungsmembran wirkenden Elastomerteil bildenden Einziehung versehen sein.
Anhand einer schematischen Zeichnung sind Aufbau und Funktionsweise von Ausführungsbeispielen nach der Erfindung näher erläutert. Dabei zeigen:
- Fig. 1: einen Querschnitt durch eine Lagerbuchse und
- Fig. 2: einen Längsschnitt durch diese Lagerbuchse entsprechend der Schnittlinie II-II nach Fig. 1,
- Fig. 3: einen Querschnitt durch eine Lagerbuchse mit Hohlkammern in den Tragstollen,
- Fig. 4: einen Querschnitt durch eine Lagerbuchse mit einem zusätzlichen Dämpfungskanal gemäß der Erfindung und
- Fig. 5: einen Längsschnitt durch eine Lagerbuchse mit einem zusätzlichen Absorber.

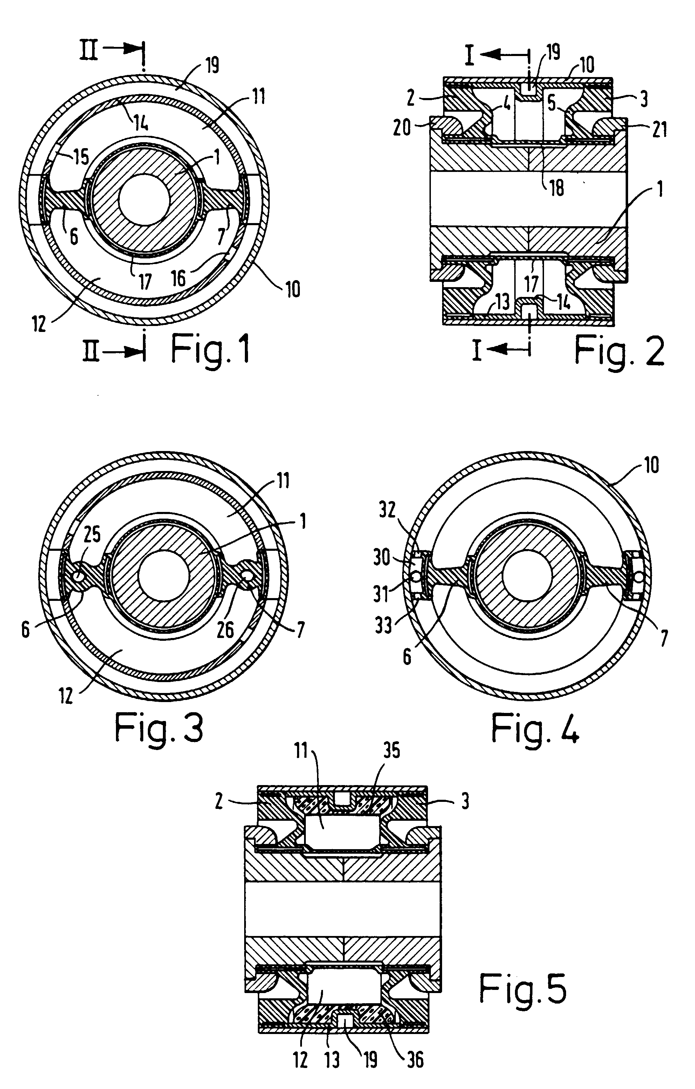

Wie aus den Fig. 1 und 2 zu ersehen ist, weist die hydraulisch dämpfende Lagerbuchse einen hohlzylindrischen Lagerkern 1 aus Metall oder Kunststoff auf, der entsprechend Fig. 2 auch in axialer Richtung mittig geteilt sein kann. An den beiden Enden des Lagerkernes 1 sind die sich radial erstreckenden Tragfedern 2 und 3 angeformt, die im mittleren Bereich ihrer radialen Erstreckung einen nach innen gewölbten Wandungsteil 4 bzw. 5 aufweisen. Darüberhinaus sind - wie man insbesondere aus Fig. 1 ersieht - zwischen den beiden Tragfedern 2 und 3 sich horizontal erstreckende, radiale Tragstollen 6 und 7 vorgesehen. Radial außenliegend zu den beiden Tragstollen 2 und 3 ist ein Außenrohr 10 als ein Angriffspunkt der Lagerabstützung vorgesehen.

Damit ist durch die beiden Tragstollen 6 und 7 der Raum zwischen den Tragfedern 4 und 5 in zwei Kammern 11 und 12 oberhalb und unterhalb der Tragstollen 6 und 7 abgeteilt, die beide mit einer Flüssigkeit gefüllt sind. Zusätzlich ist zwischen den beiden Tragfedern 2 und 3 angrenzend an das Außenrohr 10 eine zylindrische Hülse 13 mit einer mittigen Einziehung 14 eingesetzt, die mit radial gerichteten Öffnungen 15 in der oberen Kammer 11 und 16 in der unteren Kammer 12 einen Überströmkanal zwischen den beiden Flüssigkeitskammern 11 und 12 bildet.

Zusätzlich ist zwischen den beiden Tragfedern 2 und 3 im an den Lagerkern angrenzenden Bereich ein membranförmiges Elastomerteil 17 vorgesehen, das eine ringförmige Einziehung 18 am Außenumfang des Lagerkernes 1 praktisch als Entkopplungsmembran begrenzt.

Wesentlich ist, daß alle Elastomerteile, d.h. die beiden Tragfedern 2 und 3, die Tragstollen 6 und 7 sowie das zylindrische Elastomerteil 17 zusammenhängend als einstückiges Formteil gespritzt und ausvulkanisiert sind. Dadurch wird insbesondere die Montage für die fertige Lagerbuchse erheblich vereinfacht.

Wie man weiter aus Fig. 2 erkennt, sind auf die Enden des Lagerkernes 1 im Bereich der sich nach innen wölbenden Wandungsbereiche 4 und 5 der Tragfedern 2 und 3 sich radial erstreckende, wulstförmige Anschlagringe 20 und 21 vorgesehen.

Die Funktionsweise dieser Lagerbuchse ist nunmehr die folgende.

Üblicherweise wird eine solche hydraulisch gedämpfte Lagerbuchse als Drehmomentstütze für den Motor eines Kraftfahrzeuges eingesetzt. Derartige Buchsen haben den Vorteil, daß sie eine abreißsichere Motorlagerung darstellen.

In den beiden Kammern 11 und 12 befindet sich - wie bereits ausgeführt - eine Flüssigkeit, die bei Auf- und Abbewegen des Lagerkerns 1 durch den Überströmkanal 19 in den jeweils anderen Kanal gepumpt wird. Bei jedem Hub entsteht somit ein Überdruck in der entsprechenden Arbeitskammer, wodurch im Vergleich zu einfach wirkenden, konventionellen Hydrolagern mit Über- und Unterdruckphase in der Arbeitskammer eine höhere Arbeit dissipiert werden kann.

Bei kleineren Auslenkungen ist die Lagerbuchse sehr weich, insbesondere durch die Gestaltung der Tragfedern 2 und 3 mit den eingezogenen Wandungsteilen 4 und 5. Bei größeren Auslenkungen kommen jedoch die beiden Anschläge 20 und 21 sehr schnell in Eingriff mit den Tragfedern 2 und 3, so daß damit das Lager zunehmend härter wird. Der Steifigkeitsverlauf läßt sich dabei durch die geometrische Gestaltung und/oder den Werkstoff dieser Anschläge 20 und 21 in weiten Bereichen einstellen.
Durch eine geometrische Gestaltung des Überströmkanals 19, der im Grunde durch die zylindrische Hülse 13 mit der mittigen Einziehung 14 gebildet wird, kann das hydraulische Verhalten der Lagerbuchse, d.h. insbesondere das Dämpfungsvermögen bei entsprechenden Frequenzen, variiert und eingestellt werden.

Um das Lager auch bei hohen Frequenzen akustisch weich zu halten, d.h. eine dynamische Verhärtung zu vermeiden, ist eine Amplitudenentkopplung vorgesehen, indem zwischen dem Lagerkern 1 und dem als Entkopplungsmembran 17 wirkenden Elastomerteils ein Luftspalt 18 freigelassen worden ist, der durch eine entsprechende Einziehung im Lagerkern 1 gebildet ist. Bei hohen Frequenzen, bei denen der Überströmkanal 19 hydraulisch verschlossen ist, können daher Volumenänderungen in den Arbeitskammern, die durch kleine Schwingungsamplituden erzeugt sind, in diesem Luftspalt aufgenommen werden.

Wesentlich bei solchen Lagerbuchsen ist darüberhinaus noch, daß unterschiedliche Wärmedehnungen ausgeglichen werden können bzw. daß durch Schrumpf hervorgerufene Zugspannungen in den Tragstollen 6 und 7 vermieden bzw. kompensiert werden. Zur Lösung dieses Problems sind entsprechend dem Querschnitt nach Fig. 3 die Tragstollen 6 und 7 mit zentralen, sich längs erstreckenden Hohlkammern 25 und 26 versehen. Dadurch ist eine Strekkung der Tragstollen 6 und 7 in radialer Richtung möglich, ohne daß ein frühzeitiges Einreißen der Tragstollen über der Lebensdauer zu befürchten ist.

Ein weiteres Problem besteht darin, daß man insbesondere bei Dieselmotoren bestrebt ist, die Motorlager im Bereich der Leerlaufdrehzahl so weich wie möglich zu gestalten, um Schwingungsübertragungen des Motorschüttelns auf die Karosserie und damit den Fahrgastraum zu vermeiden. Dies wird mit einer Ausführungsform entsprechend dem Querschnitt nach Fig. 4 erreicht. Danach ist parallel zum Überströmkanal 19 im Anbindungsbereich der Tragstollen 6 und 7 angrenzend an das Außenrohr 10 ein gesonderter Überströmkanal 30 von geringer Länge vorgesehen, in dem eine mitschwingende Masse 31 von beispielsweise Kugelform sich nach oben und unten relativ frei bewegen kann, wobei jedoch die Zuströmöffnung 32 und die Abströmöffnung 33 einen geringeren Durchmesser als die schwingende Masse 31 aufweisen, um ein Herausrutschen aus dem Kanal 30 zu vermeiden. Diese mitschwingende Masse bewirkt ein Unterschwingen des Steifigkeitsverlaufs bei einer gewünschten Frequenz, beeinflußt aber demgegenüber nicht oder nur sehr geringfügig die Dämpfung bei großen Amplituden, da dieser Masse 31 nur ein begrenzter Schwingweg zur Verfügung steht. Erreicht die Masse 31 das Ende des Kanals 30 an den Aus-bzw. Eintrittsöffnungen 32 und 33, so verschließt die Masse 31 diese öffnungen, wobei dann die Flüssigkeit über den eigentlichen Überströmkanal 19 umgepumpt wird.

Eine weitere Möglichkeit des Ausgleichs eventuell auftretender Wärmedehnungen ist in Fig. 5 dargestellt. Dabei ist im Bereich zwischen den beiden Tragfedern 2 und 3 angrenzend an die Hülse 13 für den überströmkanal 19 je ein Absorber 35 und 36 aus einem Elastomer mit eingeschlossenen Gasbläschen angeordnet. Ein solcher Absorber ist relativ leicht zusammenpreßbar und kann damit durch Wärmedehnung bedingte Volumenänderungen in den Kammern 11 und 12 leicht ausgleichen.

Insgesamt ergibt sich also eine Lagerbuchse, die einfach hergestellt werden kann und bei der durch die vorgesehene Modulbauweise eine Anpassung an unterschiedlichste Gegebenheiten und Forderungen auf einfache Weise möglich ist. Insbesondere zeigt die beschriebene Buchse ein sehr weiches Verhalten bei kleinen Auslenkungen, während bei größeren Schwingungsamplituden durch entsprechende Anordnung von Anschlägen eine schnelle Steifigkeitserhöhung erfolgt, um damit die Auslenkungen der Buchse zu begrenzen.

## Patentansprüche

1. Hydraulisch dämpfende Lagerbuchse, insbesondere für Kraftfahrzeuge, mit einem hohlzylindrischen Lagerkern (1) und einem Außenrohr (10), zwischen denen stirnseitig im wesentlichen radial verlaufende Tragfedern (2, 3) aus elastomerem Material mit einem nach innen gewölbten Wandungsteil (4, 5) sowie zwischen Lagerkern (1) und Außenrohr (10) beidseitig horizontal verlaufende, radiale Tragstollen (6, 7) angeordnet sind, die den Raum zwischen den Tragfedern (2, 3) in eine obere und eine untere, mit Flüssigkeit gefüllte Kammer (11, 12) unterteilen, die über einen ringförmigen Kanal (19) miteinander in Verbindung stehen, wobei alle elastomeren Bereiche in Form der beiden Tragfedern (2, 3), der Tragstollen (6, 7) sowie eines zylindrischen, zwischen den beiden Tragfedern (2, 3) sich entlang des Lagerkerns (1) erstreckenden, membranförmigen Elastomerteils (17) als einstückiges Formteil gefertigt und ausvulkanisiert sind und auf den Enden des Lagerkerns (1) im Bereich der sich nach innen wölbenden Wandungsbereiche (4, 5) der Tragfedern (2, 3) sich radial erstreckende, wulstförmige Anschlagringe (20, 21) angeordnet sind, dadurch gekennzeichnet, daß zwischen den Tragstollen (6, 7) und dem Außenrohr (10) ein zusätzlicher, kreisabschnittförmiger Kanal (30) begrenzter Länge mit reduzierten Eintritts- und Austrittsöffnungen (32, 33) verläuft, in dem eine kugelförmige oder zylindrische Masse (31) geringfügig kleineren Durchmessers als dem des Kanals (30) eingeschlossen ist.

2. Lagerbuchse nach Anspruch 1, dadurch gekennzeichnet, daß innenliegend zum Außenrohr (10) zwischen den beiden Tragfedern (2, 3) eine zylindrische Hülse (13) mit einer mittigen, radialen Einziehung (14) angeordnet ist, die mit dem Außenrohr (10) den ringförmigen Überströmkanal (19) bildet.

3. Lagerbuchse nach Anspruch 1, dadurch gekennzeichnet, daß die radialen Tragstollen (6, 7) eine zentrale, sich längs erstreckende Hohlkammer (25, 26) aufweisen.

4. Lagerbuchse nach Anspruch 2, dadurch gekennzeichnet, daß innerhalb der beiden Flüssigkeitskammern (11, 12) und angrenzend an die den Überströmkanal aufweisende Hülse (13) ein Absorber (35, 36) aus elastomerem Material mit eingeschlossenen Gasbläschen angeordnet ist.

5. Lagerbuchse nach Anspruch 1, dadurch gekennzeichnet, daß der Lagerkern (1) im Bereich des membranförmigen Elastomerteils (17) mit einer ringförmigen, einen Luftspalt zum darüberliegenden, als Entkopplungsmembran wirkenden Elastomerteil (17) bildenden Einziehung (18) versehen ist.

## Claims

1. A hydraulically damping bearing bush, more particularly, for motor vehicles, comprising a hollow cylindrical bearing core (1) and an outer tube (10) between which supporting springs (2, 3) of an elastomeric material having a wall part (4,5) curved inwards oriented substantially radially at the face end as well as radial supporting cleats (6, 7) oriented horizontally at both ends between said bearing core (1) and said outer tube (10) are arranged, said cleats dividing the space between said supporting springs (2, 3) into an upper and lower chamber (11, 12) filled with fluid, said chambers being connected to each other via an annular passage (19), all elastomeric portions in the form of said two supporting springs (2, 3), said supporting cleats (6, 7)) as well as a cylindrical, diaphragmatic elastomeric part (17) extending between said two supporting springs (2, 3) along said bearing core (1) being fabricated and vulcanized as an integral molding, and radially extending bead-shaped stop rings (20, 21) being arranged on the ends of said bearing core (1) in the region of said inwardly curved wall portions (4,5) of said supporting springs (2, 3), characterized in that running between said supporting cleats (6, 7) and said outer tube (10) is an additional, circular section-shaped passage (30) of defined length having reduced inlet and outlet ports (32, 33), a spherical or cylindrical mass (31) having a slightly smaller diameter than that of said passage (3) being included in said passage (3).

2. The bearing bush according to claim 1, characterized in that arranged inside said outer tube (10) between said two supporting springs (2, 3) is a cylindrical sleeve (13) having in the middle a radial recess (14) forming with said outer tube (10) said annular-shaped overflow passage (19).

3. The bearing bush according to claim 1, characterized in that said radial supporting cleats (6, 7) comprise a central hollow chamber (25, 26) extending longitudinally.

4. The bearing bush according to claim 2, characterized in that arranged within said fluid chambers (11, 12) and adjoining said sleeve (13) comprising said overflow passage is an absorber (35, 36) of an elastomeric material having gas bubble inclusions.

5. The bearing bush according to claim 1, characterized in that said bearing core (1) is provided in the portion of said diaphragmatic elastomeric part (17) with an annular recess (18) forming an air gap to said elastomeric part (17) located above, acting as a decoupling diaphragm.

## Revendications

1. Douille de montage assurant un amortissement hydraulique, en particulier pour véhicules automobiles, comprenant un noyau de montage cylindrique creux (1) et un tube extérieur (10), entre lesquels sont agencés du côté frontal des ressorts de support (2, 3) en matériau élastomère et s'étendant sensiblement radialement, comportant une partie de paroi (4, 5) incurvée vers l'intérieur, ainsi que des montants de support (6, 7) radiaux qui s'étendent horizontalement des deux côtés entre le noyau de montage (1) et le tube extérieur (10), lesquels subdivisent l'espace entre les ressorts de support (2, 3) en une chambre supérieure et une chambre inférieure (11, 12) remplies de liquide, lesdites chambres communiquant l'une avec l'autre via un canal de forme annulaire (19), toutes les régions en élastomère sous la forme des deux ressorts de support (2, 3), des montants de support (6, 7), ainsi que d'une pièce en élastomère en forme de membrane (17) cylindrique qui s'étend entre les deux ressorts de support (2, 3) le long du noyau de montage (1), étant réalisées d'une seule pièce moulée et vulcanisée, et aux extrémités du noyau de montage (1) dans la région des parties de parois incurvées vers l'intérieur (4, 5) des ressorts de support (2, 3) sont agencées des bagues de butée (20, 21) en forme de bourrelets qui s'étendent radialement, caractérisée en ce que, entre les montants de support (6, 7) et le tube extérieur (10), s'étend un canal additionnel en forme de secteur circulaire (30) de longueur limitée avec des ouvertures d'entrée et de sortie réduites (32, 33), dans lequel est enfermée une masse sphérique ou cylindrique (31) d'un diamètre légèrement plus petit que celui du canal (30).

2. Douille de montage selon la revendication 1, caractérisée en ce qu'il est prévu à l'intérieur vis-à-vis du tube extérieur (10) et entre les deux ressorts de support (2, 3) une douille cylindrique (13) avec un creux médian radial (14), qui forme avec le tube extérieur (10) le canal de déversement annulaire (19).

3. Douille de montage selon la revendication 1, caractérisée en ce que les montants de support radiaux (6, 7) comportent une chambre creuse (25, 26) centrale qui s'étend dans le sens longitudinal.

4. Douille de montage selon la revendication 2, caractérisée en ce que, à l'intérieur des deux chambres à liquide (11, 12) et de manière adjacente à la douille (13) qui présente le canal de déversement, est agencé un élément d'absorption (35, 36) en matériau élastomère avec inclusion de bulles de gaz.

5. Douille de montage selon la revendication 1, caractérisée en ce que le noyau de montage (1) est pourvu, dans la région de la pièce en élastomère en forme de membrane (17), d'un creux annulaire (18) formant un intervalle d'air vis-à-vis de la partie en élastomère (17) située au-dessus et faisant office de membrane de découplage.
